# EUROPEAN PATENT APPLICATION

(11) **EP 2 728 480 A1**
(43) Date of publication of application: **07.05.2014**
(21) Application number: 12464020.2
(22) Date of filing: 02.11.2012
(51) Int. Cl.: G06F 11/26, G09G 3/00

(54) **Testing an operator control device**

(71) Applicant: Continental Automotive GmbH, 30165 Hannover (DE)
(72) Inventor: Cojocaru, Dragos-Constantin, 700720 Iasi (RO); Constantinescu, Eugen, 700489 Iasi (RO); Mihai Capatina, Dinu, 700006 Iasi (RO)

(57) **Abstract**

A method for the automated testing of an operator control device (14) having a digital graphic display (32) comprises the steps of: inputting input data (22) into the operator control device (14); generating pixel image data (150) for the image which is displayed on the digital graphic display; identifying output data (24) from the operator control device from the pixel data; comparing the identified output data (24) with output data which corresponds to the input data in order to determine whether the operator control device (14) is operating correctly.

## Description

### Field of the invention

The invention relates to a method for the automated testing of an operator control device, and also to a test apparatus.

### Background to the invention

Operator control devices with graphic displays which can generate complex arrangements of display elements and graphics or films on the graphic display are also used, for example, in vehicles.

When creating a new operator control device, for example an infotainment system, it is necessary to carry out frequent verification tests to ensure correct operation. In the process, various test cases with a variety of different inputs generally have to be executed. The operator control device can then provide the user with a variety of output data on various channels, for example visual data, audio data or haptic data.

Testing an operator control device can be complicated if, for example, a trial engineer interacts with the operator control device via various busses (CAN, LIN, FlexRay and/or Ethernet), various input apparatuses, such as buttons, rotary buttons or touch-displays. The operator control device moves to another state and displays a variety of information on its display depending on the current state of the system and the provided input data which can originate both from the trial engineer and also from other sources, such as radio stations.

Furthermore, the bus traces (for example CAN, LIN, serial, SPI, I2C and/or I2S), the audio output and the displayed GUI can be monitored by the trial engineer and have to be compared with the expected output data for the purpose of evaluating the test cases. The analysis, which is carried out by a trial engineer, of the response of the operator control device to various input sources may be susceptible to faults and require a great deal of attention, time and labor.

Automating a test by way of a test automation system is generally carried out for regression tests. A test automation system can record images and films of a test sequence, a trial engineer having to examine said images and films at a later time for determination in order to decide whether the test was successful or has failed.

### Summary of the invention

The object of the invention is that of simplifying testing of an operator control device.

This object is achieved by the subject matter of the independent claims. Further embodiments of the invention can be gathered from the dependent claims and from the following description.

A first aspect of the invention relates to a method for the automated testing of an operator control device having a digital graphic display. The operator control device can be a multimedia system for reproducing audio and video data. By way of example, the operator control device can be a complex infotainment system which uses various input channels, observable information channels and various output channels including displays and screens.

According to one embodiment of the invention, the method comprises the steps of: inputting input or test data into the operator control device; generating pixel image data for the image which is displayed on the digital graphic display; identifying output data from the operator control device from the pixel data; and comparing the identified output data with output data which corresponds to the input data or test data in order to determine whether the operator control device is operating correctly.

By way of example, the test data can be input into the operator control device from a test apparatus in an automated manner by means of one or more input channels. As a result, a change in state is produced in the operator control device, this leading to output data, for example the current image and/or graphics on the display and also internal states, changing. In this case, the operator control device can be regarded as being a finite state machine which changes its output data and its internal state on the basis of input data.

The test apparatus can have a corresponding state machine which represents at least a portion of the state machine of the operator control device. In this way, the test apparatus can determine which internal states and/or which output data would have had to be generated in response to the input data if the operator control device were operating correctly. In other words, the state machine of the test apparatus can generate test data with which the internal state data and/or output data can be compared.

In particular, the test apparatus can generate and further process pixel image data, that is to say image data which is based on pixels. The test apparatus can determine, for example, display elements in the pixel image data which can then be interpreted as output data. The test apparatus can compare the pixel image data or constituent parts thereof with stored image data in order to check, for example, that said pixel image data or constituent parts thereof are correctly shown.

According to one embodiment of the invention, the pixel image data is generated by reading out image data from at least a portion of the screen memory of the operator control device. In addition, the pixel image data can be generated with a camera which is directed at the display and is connected to the test apparatus.

According to one embodiment of the invention, when output data is identified, at least one display element is identified in the pixel image data. A display element can be, for example, a button (virtual operator control button), a text element or a progress bar. The output data which is to be compared can comprise a graphical illustration of the display element, a size of the output element and/or a position of the display element.

According to one embodiment of the invention, the method comprises the steps of: generating black/white image data by applying a threshold value to pixels from amongst the pixel image data; and identifying output data in the black/white image data. It is possible that the images on the display or the screen of the operator control device comprise a large number of colors and graphical design elements beneath which a complex background image can additionally be laid. As a result of generating black/white image data, which generally contains less information, further processing of the image data, identification of display elements and the comparison with other image data can be simplified.

According to one embodiment of the invention, the method comprises the steps of: generating color-converted image data by color-converting the pixel image data; and identifying output data in the color-converted image data. The further processing of the pixel image data can also be simplified in this way.

According to one embodiment of the invention, the method comprises the step of: identifying a display element from the pixel image data by pattern recognition with the aid of a template or a stencil of the display element. By way of example, a template can be stored in the test apparatus for specific display elements, such as buttons or graphical elements. This template can be identified in the pixel image data with the aid of pattern recognition in order to determine the presence and/or the position of the corresponding display element in the pixel data.

According to one embodiment of the invention, the method comprises the step of: identifying a display element from the pixel image data by optical character recognition (OCR). Display elements can also comprise text. By virtue of identifying a, for example unambiguous, text element, it is also possible to determine whether a corresponding display element is located in the pixel image data and/or to determine the position which it assumes.

According to one embodiment of the invention, the method comprises the step of: identifying a display mask of the operator control device by identifying a plurality of display elements. The operator control device can generate various display masks in which different display elements are displayed. Since one or more display elements or the state and/or position thereof are determined, it is possible to establish which display mask is currently being displayed by the operator control device.

According to one embodiment of the invention, the method comprises the steps of: generating pixel image data at various first times; assigning second times to the pixel data which corresponds to the test data; comparing time differences between the first times and time differences between the second times in order to determine an operating speed of the operator control device. By way of example, the test apparatus can record a sequence of pixel image data which is generated in response to specific input data. By way of example, two specific, predefined views and the time interval thereof can be identified in this sequence of pixel image data. In this way, it is possible to determine whether the operator control device is at the correct operating speed.

A further aspect of the invention relates to a test apparatus which is designed to execute the method as is described above and will be described below. It goes without saying that features of the test apparatus as are described above and will be described below can also be features of the method.

The test apparatus can be, for example, a so-called watchdog apparatus which is designed to input input data (as test data) into the operator control device, and also to read out from the operator control device internal states and/or output data from the operator control device. The data can be input and read out, for example directly, by means of corresponding memory regions of the operator control device.

### Brief description of the figures

Exemplary embodiments of the invention will be described in detail below with reference to the appended figures.
- Fig. 1: schematically shows an operator control device and a test apparatus according to one embodiment of the invention.
- Fig. 2: schematically shows a test logic system according to one embodiment of the invention.
- Fig. 3: shows a sequence diagram for a test method according to one embodiment of the invention.
- Fig. 4: shows a sequence diagram with a method for testing an operator control device according to one embodiment of the invention.
- Fig. 5: shows the content of a screen of an operator control device for a test arrangement according to one embodiment of the invention.
- Fig. 6a: shows a state machine of an operator control device for a test arrangement according to one embodiment of the invention.
- Fig. 6b: shows a state machine of a test apparatus according to one embodiment of the invention.
- Fig. 7: shows an activity diagram for starting an operator control device and a test apparatus according to one embodiment of the invention.

In principle, identical or similar parts are provided with the same reference symbols.

### Detailed description of exemplary embodiments

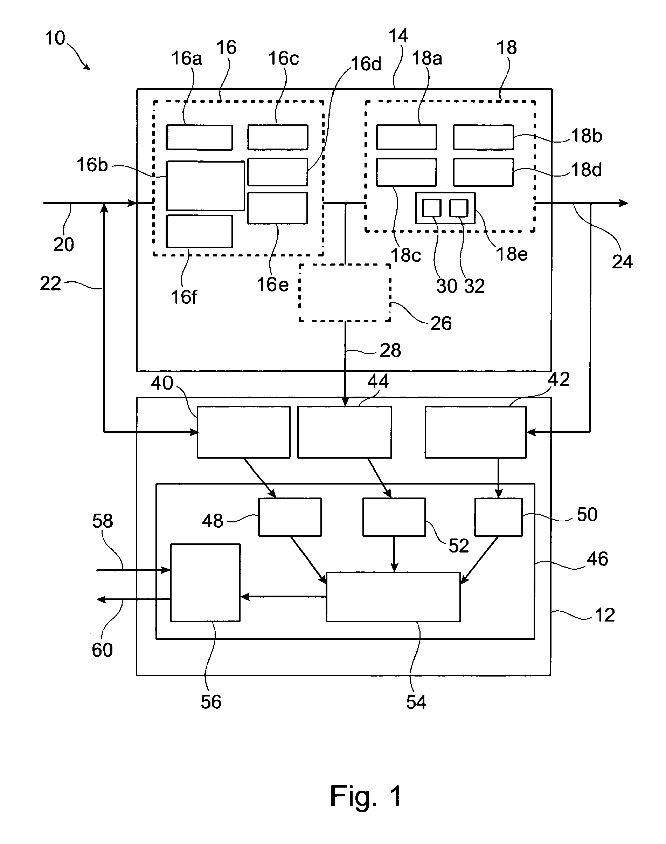

Fig. 1 shows a test arrangement 10 which comprises a test apparatus (watchdog) 12 and an operator control device 14 in the form of a multimedia system 14. The operator control device 14 or multimedia system 14 can be designed to be installed in a vehicle, for example a passenger car.

The operator control device 14 comprises input modules 16, for example drives 16a, antenna DAB 16b, ID 16c, serial 16d, BT 16e, NTW 16f, and output modules 18, for example an audio output module 18a, serial 18b, NTW 18c, BT 18d and a video output module 18e. The input module 16 can receive input data 20 (and test data 22 from the test apparatus 12) . The output modules 18 can generate output data 24.

In respect of the operator control test, the logic system of the operator control device 12 can be considered to be a state machine 26 (finite state machine - FSM). Internal state data 28 can be output and/or read out from the operator control device 12 or the state machine 26.

Input data 20 may be, for example, all possible input data for a multimedia system 14:
- operation of an input apparatus (keying in, contact operations, etc.)
- bus events (CAN, LIN, FlexRay, I2C and/or I2S, etc.)
- wireless events (BT communication, DAB, etc.)
- use of CD, USB or SD
- serial inputs
- other specific inputs

Output data 24 may be, for example, all possible output data of a multimedia system 14:
- video data (display, etc.)
- audio data (via loudspeaker, etc.)
- bus data (CAN, LIN and/or FlexRay, etc.)
- wireless data (BT communication, etc.)
- protocol data (traces): serial, USB, etc.
- other specific outputs

In particular, the video output module 18e can comprise a screen memory 30 and a digital graphic display 32, for example a screen 32.

State data 28 of the operator control device may be the following data:
- the operator control device 14 outputs protocol data (traces) which indicates internal states (the states of the state machine 26)
- a state of the state machine 26 can be unambiguously described by a pair of output protocol data items (display, audio, BUS, etc.)

The ability to test an operator control device 14 is not an intrinsic property of a software component and cannot be measured directly (for example the variable of the software component). Rather, the ability to test is an extrinsic property which results from the dependencies of the software which is to be tested and the test objectives, the test methods used and the test resources (in other words the context of the test).

The ability to test software components can be determined on the basis of factors such as, for example:
- Ability to control: the degree to which it is possible to control the state of the tested software component ("component under test" - CUT) to the extent which is required for the test.
- Ability to observe: the degree to which it is possible to observe (immediate and final) test results.
- Ability to isolate: the degree to which it is possible to test the component under test in an isolated manner.
- Separation of task areas: the degree to which the component under test has an individual, well-defined task.
- Ability to understand: the degree to which the component under test is documented or self-explanatory.
- Ability to automate: the degree to which it is possible to automate testing of the component under test.
- Heterogeneity: the degree to which the use of different technologies requires the parallel use of different test methods and instruments.

The test apparatus 12 comprises an input monitor 40, an output monitor 42 and a state monitor 44 and can comprise further monitors for other observable information channels.

A test logic system 46 or a test automation module 46, which can be designed partially or entirely using software, comprises a register 48 for input data 22, a register 50 for output data 50 and a register 52 for state data 28.

The test automation module 46 monitors input events by means of the input data 20, monitors changes in the state machine 26 by means of the state data 28 and changes in output data 24. The test automation module 46 can record input events, changes in the FSM and changes in the output. The recording operations can be synchronous or asynchronous operations.

The test automation module 46 can reproduce recorded events and send them as input results. By way of example, said test automation module can generate test data 22 and send it to the operator control device 14.

The test automation module 46 has a test logic system 54 or test result comparison logic system 54 which processes the connections between input events, changes in the FSM and expected changes in the output.

The test automation module 46 comprises a test automation control means 56 in the form of a GUI application which can be operated by a user 58 and which can display the test results 60.

The test apparatus 12 comprises a mode as the state observer. In many cases, the physical state of the operator control device 14 cannot be determined by direct observation. Instead, in the case of an automated test, indirect effects of the internal states are observed by combining the output data 24 and the state data 28.

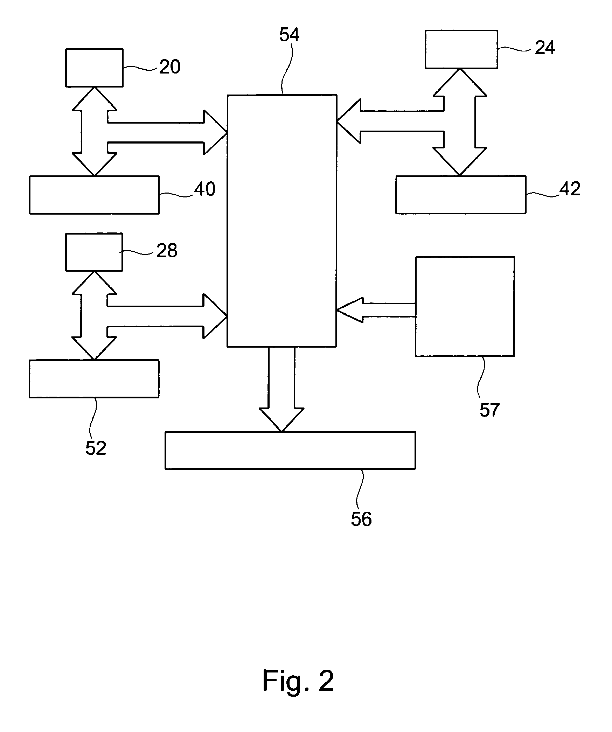

Fig. 2 schematically shows the test logic system 54. The test logic system can compare real input data 20 and the content of the input register 40. The test logic system can compare output data 24 which is generated by the operator control device 14 and the content of the output data register 42. The test logic system 54 can compare state data 28 which is generated by the operator control device 14 and the content of the state data register 52. In addition, the test logic system 54 can receive additional information or results from the test apparatus 12. Furthermore, the test logic system 54 can transmit a test result, which is based on the comparison, to the test automation control means 56.

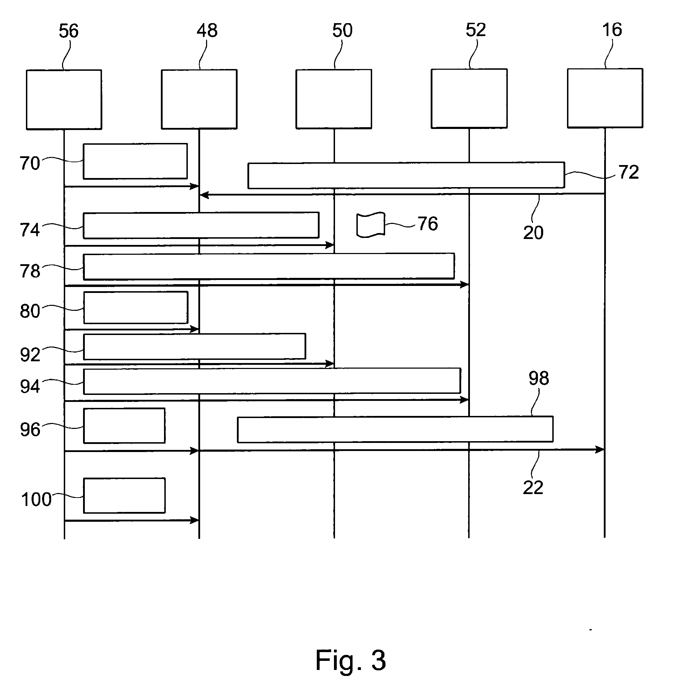

Fig. 3 shows a sequence diagram, with the properties of the test automation module 46 and the test automation control means 54 being explained. Starting and stopping recording and reproduction of the recording are described in particular.

Fig. 3 shows, as objects, the test automation control means 56, the input data register 48, the output data register 50, the state data register 523 and the input modules 16.

The input data register 48 can receive input data 20 from the input modules 16 and send test data 22 to the input modules 16.

After recording of input events is started by the test automation control means 56 (step 70), the input events are received (step 72).

The test automation control means 56 then starts recording one or more output screens 32 (step 74). In this step 74, pixel image data 76, for example, is read out from a screen memory 30.

Furthermore, the test automation control means 56 starts recording information about the state of the state machine 26 (step 78).

Recording of the input events is then stopped (step 80), recording of the output screens 32 is stopped (step 92) and recording of information about the state of the state machine 26 is stopped (step 94).

The recorded input data 20 can be output to the input modules 16 again later as test data 22.

In step 96, the test automation control means 56 starts a series of tests. Following this in step 98, the recorded events or the test data 22 are/is output to the input modules 16. In step 100, the series of tests is stopped.

The test automation control means 56
- can be used by the user to develop a series of tests,
- can be used by the user to start and stop the execution of series of tests,
- can start and stop recording operations for input data, state data and output data,
- can display the results and protocol data in a form which can be read by the user,
- can be used by the user to print out the analysis of the results and test results, and
- can comprise artificial intelligence algorithms.

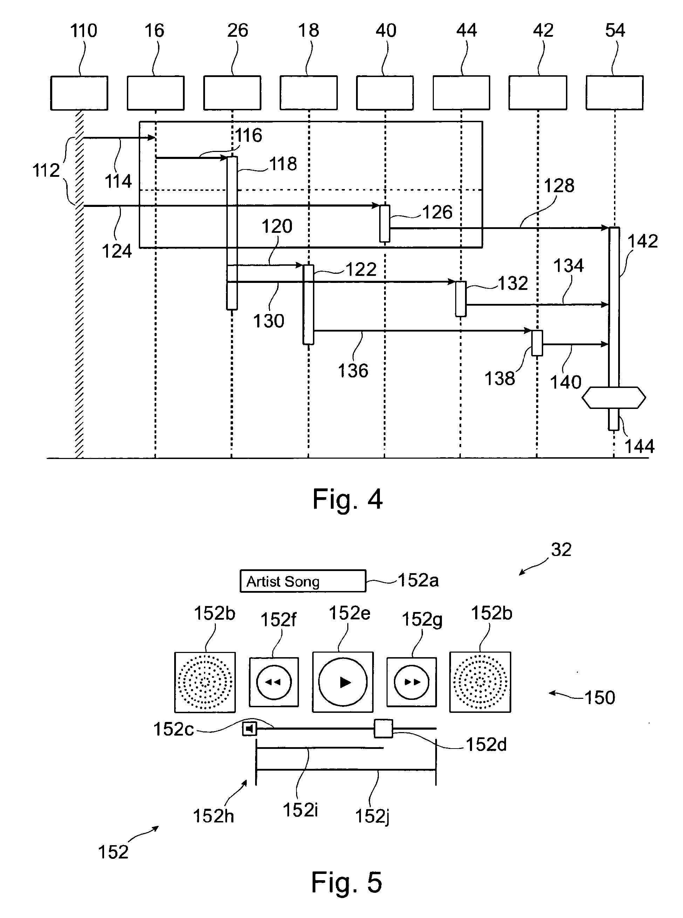

Fig. 4 shows a sequence diagram with a method for testing the operator control device 14 with the test apparatus 12 and unfolding of events during a test case.

In this case, the object 110 identifies the area surrounding the test arrangement 10.

In step 112, an event is triggered, for example a CAN event or pushing of an on-off button. Input data 20 or test data 22 is sent (step 114) to the input modules which instruct (step 116) the state machine 26 to update (step 118) the internal state. The state machine 26 instructs (step 120) the output modules 16 to generate (step 122) output data 24.

The input data 20 which is generated by the event is passed (step 124) to the input data monitor 40 which processes (step 126) the test data 22 further and updates (step 128) the test logic system 54 with this data.

The changed state data 28 is passed (step 130) to the state data monitor 44 which processes (step 132) the state data 28 further and updates (step 134) the test logic system 54 with this data.

The generated output data 24 is passed (step 136) to the output data monitor 44 which processes (step 138) the state data 24 further and updates (step 140) the test logic system 54 with this data.

Based on the input data 20, the test logic system determines the expected state of the operator control device 12 and the corresponding expected state data and output data and compares said data with the received data (step 142). A test result is derived from the comparison and output (step 144).

Fig. 5 shows an image or screen content of a display 32 which can be generated by the operator control unit 14. The output data monitor 42 can generate pixel image data 150 from the image and process said pixel image data further during step 138.

By way of example, the image or the pixel image data 150 can comprise display elements 152, by way of example are, but without restriction:
- text elements 152a which can be converted into the corresponding string value,
- icons or unchangeable graphical elements 152b,
- sliding controller 152c with a sliding head 152d,
- windows,
- buttons, such as a play button 152e, a rewind button 152f and a fast-forward button 152g,
- changeable elements, such as a progress bar 152h with a progress bar 152i which indicates, for example, the real progress of a song which is playing and a complete region 152j of the progress bar,
- various widgets (for example an analog clock).

Any influence which the environment could have during the course of obtaining the image should be avoided or restricted, and therefore the image is generally taken from the screen memory 30 of the operator control device 14. If this is not possible and the image is generated, for example, by means of a camera, said image can be adapted in order to reduce the environmental influence (for example illumination, lens distortion) with the correct calibration.

Some operations, for example binarization and color space conversion, can be applied in step 138, for example on account of a complex background which is usually present in an infotainment system 14.

In the case of binarization, black/white image data can be generated by applying a threshold value to pixels from the pixel image data 150. Examples include:
● a global defined threshold value (a defined, predetermined value such as 128 on a 256 gray conversion level image)
● a self-determined global threshold value, for example by means of various algorithms:
   - IsoData - Ridler TW, Calvard S. (1978) Picture thresholding using an iterative selection method, IEEE Trans. System, Man and Cybernetics, SMC-8:630-632
   - Minimum Cross Entropy - Li CH, Lee CK. (1993) Minimum Cross Entropy Thresholding, Pattern Recognition, 26(4): 617-625
   - Otsu - Otsu N. (1979) A threshold selection method from gray-level histograms, IEEE Trans. Sys., Man., Cyber., 9:62-66, doi: 10.1109/TSMC.1979.4310076
● an adaptive local threshold value, for example:
   - Bernsen - Bernsen, J (1986), "Dynamic Thresholding of Grey-Level Images", Proc. of the 8th Int Conf. on Pattern Recognition
   - Sauvola - Sauvola, J and Pietaksinen, M (2000), "Adaptive Document Image Binarization", Pattern Recognition 33(2):225-236

In the case of color space conversion, color-converted image data can be generated by color conversion of the pixel image data 150. Working in a certain color space can provide advantages, in particular depending on the operation which is to be executed. Examples of color spaces are RGB, YCrCb, HSV, HLS, CIE, L*a*b*, CIE L*u*v*, BAYER.

In step 142, display elements 152 can be identified in the further-processed pixel image data 150 or the original pixel image data.

The position of display elements 152 within an image can be detected in particular in the case of individual image processing.

If, however, there are a plurality of images (that is to say a sequence of pixel image data items 150), the dynamics of the display 32 and/or of a display element 150 can be determined (for example by means of optical flux).

One example is the comparison of the length of a rectangular progress bar, which belongs to a software loading mask, for example, with the progress which is indicated in the serial protocol data or with the increment stage reached.

Another example is the comparison of a progress bar, which is not shown as a rectangular bar but rather as a ring-shaped bar, when a song is being played with the value which is indicated by in the protocol data.

A display element 152 can be identified from the pixel image data 150 by pattern recognition with the aid of a template (pattern, stencil) of the display element 152. Template matching (pattern adjustment) is, for example, a technique for determining small portions of an image which correspond to a template image (template pixel data). Some methods of this kind, which do not have to deal with rotation and invariance in size, are:
- absolute difference between pattern pixels and objective pixels,
- Euclidean distance between pixel intensities,
- cross-correlation,
- standardized cross-correlation in order also to check for problems with brightness,
- Haar cascade.

A display element 152 can also be identified from the pixel image data 150 by means of optical character recognition (OCR). An OCR module can be used to read and identify the text element 152a.

A further method which can be applied with text elements 152a is the comparison of the shown content with a value which is already known from the information which is already present in the protocol data which describes, for example, the internal state of the operator control device 14. For example, the name of the artist and of the song are already present in the serial protocol data and their shown value can be cross-checked.

Another method for comparing the protocol data and the graphical illustration which does not use OCR is the creation of the graphical illustration of the string from the protocol data and the comparison thereof with the display element by means of template matching.

The application cases can be assigned to identification of a specific display and a film analysis.

When a display is identified, individual images or pixel image data are/is generally examined. In this case, primarily two situations are to be cited:

A situation in which the structure of the display mask is specifically known, for example all the graphical elements 150, their positions and their size (this may be important for the analysis of the value of 152i). In this situation,
- correctness of the display elements 152
- their size, and/or
- their relative positions
can be checked.

A situation in which the test apparatus 12 partially knows the structure of the display mask and dynamically identifies known patterns. This can mean that the state of the operator control device 14 is partially known and the entire state of the operator control device 14 should be found. For example, the pattern of the display element 152e in the display mask can be found. Numerous display masks are identified as possible display masks by accessing a library of possible display masks of the operator control device 14. By matching all the other display elements 152 of the possible display masks (for example using a method as described further above), one display mask can be identified as having the best correspondence. This display mask can be assigned to a set of states under which it may appear, or no display masks with a sufficient level of correspondence are identified, this meaning that the operator control system is in an unknown state, this possibly indicating that there is a fault in the operator control device 14.

The arrangement of the detected display elements 152 in a display mask and the associated states can be described using a graph. Each node of the graph has a list of associated possible internal states. Time transitions between display masks are then assigned to transitions between two graphs. Correspondence between them can be considered to be a problem of a minimum spanning tree and can be solved with algorithms, for example Kruskal's algorithm.

A speed test, for example, can be carried out by means of a film analysis, that is to say an analysis of a sequence of images or image pixel data items 150.

Irrespective of whether the speed test of the operator control device 14 is based on sequences of images when the operator control device 14 is booting up or shutting down or on the operator control device 14 being in a normal operating mode, said speed test can be performed online or offline.

In both cases, the time difference between the frames can be determined for two progress states (which can be detected by a change in the analyzed frames) and compared with the time differences which are present in protocol data.

Another example is a speed test when the operator control device 14 is booting up, when a check is made to determine the time at which a non-black display or a predefined display is present, and this time is compared with a predefined value.

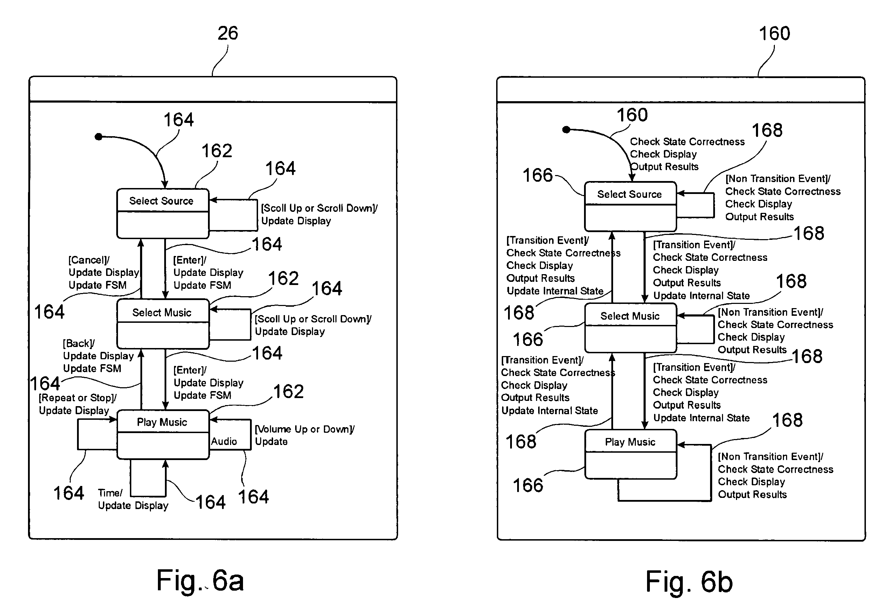

Fig 6a shows a state machine 26 of an operator control device 14 and fig. 6b shows a state machine 160 of an associated test apparatus 12.

The state machine 26 comprises a plurality of internal states 162 between which the state machine 26 can switch due to state transitions 164. In this case, the state transitions 164 are triggered, for example, by corresponding input data 20.

The test apparatus 12 or the test logic system 54 comprises a state machine 160 with internal states 166 which each correspond to one of the states 162.

By evaluating the image pixel data 150, the test logic system 54 can determine the internal state 162 which the operator control device 14 is in and itself enter the corresponding state 166. In this case, the state transitions 168 of the state machine 160 comprise test functions with which the test logic system 54 checks whether the corresponding state transition 164 was performed correctly.

These test functions are used to check whether the calculated internal state 166 of the test apparatus 12 corresponds to the state 164 which was generated in the operator control device 14.

The display 32 can be checked in an image recognition module. This can mean a check to determine whether control means (buttons/progress bars/sliding controllers/scroll bars/etc.) and properties of windows, such as position, size, state, image signature, position of the image signature, text background and foreground, text color, text orientation, borders etc., correspond to the specification.

For variable display elements 150, for example progress bars, a check can also be made to determine whether the size of the filled section, which is used to illustrate the extent of the progress, has been correctly calculated (for example with the aid of a visual output and with protocol data).

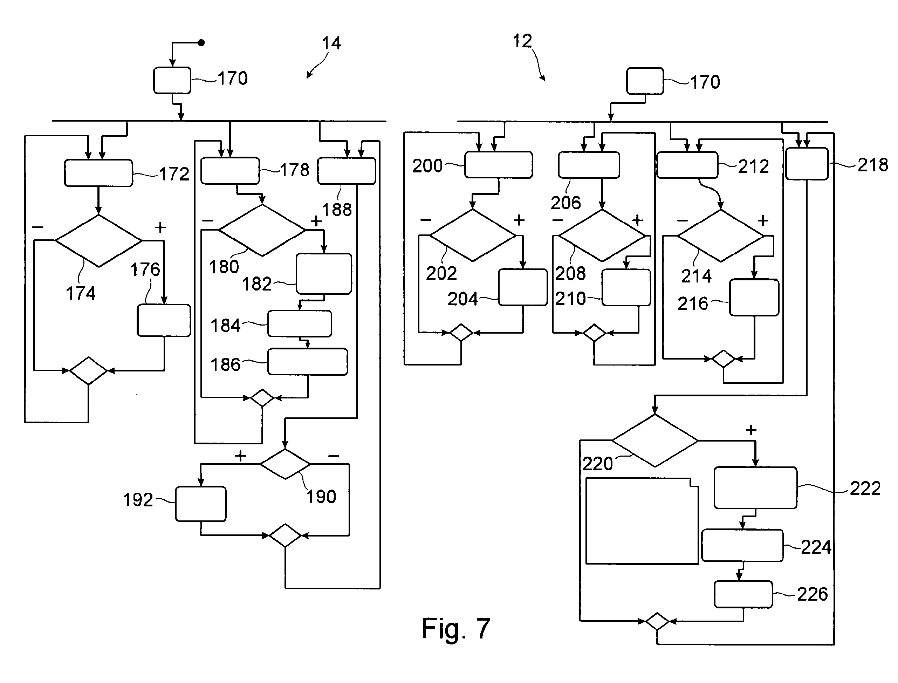

Fig. 7 shows an activity diagram for starting the operator control device 14 and the test apparatus 12. In this case, the start 170 can be triggered by a bus event, an on/off button. On account of the input data monitor 40 in the test apparatus 12, the operator control device 14 and the test apparatus 12 start at the same time.

In this case, the operator control device 14 checks for input data 20 (step 172). If an event is received (step 174) by means of new input data 20, the state machine 26 is informed (step 176).

The operator control device 14 checks the state machine 26 (step 178). If updating is required (step 180), the next state of the state machine 26 is calculated (step 182), the output modules 18 are informed (step 184) and informed that state data 28 has changed (step 186).

The operator control device 14 checks the output modules 18 (step 188). If updating is required (step 190), the output modules 18 are updated and output data 24 is generated (step 192).

The test apparatus 12 checks for new input data 20 in the input data monitor 40 (step 200). If an event is received by means of new input data 20 (step 202), the test logic system 54 is updated (step 204).

The test apparatus 12 checks for new state data 28 in the state data monitor 44 (step 206). If an event is received (step 208) by means of new state data 28, the test logic system 54 is updated (step 210).

The test apparatus 12 checks for new output data 24 in the output data monitor 42 (step 212). If an event is received (step 214) by means of new output data 24, the test logic system 54 is updated (step 216).

The test apparatus 12 controls the test logic system 54 (step 218). If updating is required (step 220), the next state 166 of the state machine 160 is calculated (step 222), the state 166 with the state 164 of the operator control system 14 (step 224) and the test result are calculated and output (step 226). The next state 166 is calculated predominantly on the basis of input data events, messages, logic and the actual state 164.

In addition, it should be noted that "comprising" does not preclude other elements or steps, and "a" or "one" does not preclude a large number. It should also be noted that features or steps which have been described with reference to one of the above exemplary embodiments can also be used in combination with other features or steps of other exemplary embodiments which have been described above. Reference symbols in the claims are not considered to constitute any restriction.

## Claims

1. A method for the automated testing of an operator control device (14) having a digital graphic display (32), the method comprising the steps of: inputting input data (22) into the operator control device (14);generating pixel image data (150) for the image which is displayed on the digital graphic display; identifying output data (24) from the operator control device from the pixel data; comparing the identified output data (24) with output data which corresponds to the input data in order to determine whether the operator control device (14) is operating correctly.

2. The method as claimed in claim 1,
wherein the pixel image data (150) is generated by reading out image data from at least a portion of the screen memory (30) of the operator control device.

3. The method as claimed in claim 1 or 2,
wherein, when output data (24) is identified, at least one display element (152) is identified in the pixel image data (105);
wherein the output data which is to be compared comprises a graphical illustration of the display element, a size of the output element and/or a position of the display element.

4. The method as claimed in one of the preceding claims, further comprising the steps of:
generating black/white image data by applying a threshold value to pixels from amongst the pixel image data (150);
identifying output data in the black/white image data.

5. The method as claimed in one of the preceding claims, further comprising the steps of:
generating color-converted image data by color-converting the pixel image data (150);
identifying output data in the color-converted image data.

6. The method as claimed in one of the preceding claims, further comprising the step of:
identifying a display element (152) from the pixel image data (150) by pattern recognition with the aid of a template of the display element.

7. The method as claimed in one of the preceding claims, further comprising the step of:
identifying a display element (152) from the pixel image data (150) by optical character recognition.

8. The method as claimed in one of the preceding claims, further comprising the step of:
identifying a display mask of the operator control device (14) by identifying a plurality of display elements (152).

9. The method as claimed in one of the preceding claims, further comprising the steps of:
generating pixel image data (150) at various first times;
assigning second times to the pixel data which corresponds to the test data;
comparing time differences between the first times and time differences between the second times in order to determine an operating speed of the operator control device.

10. The method as claimed in one of the preceding claims, wherein the operator control device (14) comprises a multimedia system for reproducing audio and video data.

11. A test apparatus (12) which is designed to execute the method as claimed in one of the preceding claims.
